# EUROPÄISCHE PATENTSCHRIFT

(11) **EP 2 815 123 B1**
(45) Veröffentlichungstag und Bekanntmachung des Hinweises auf die Patenterteilung: **18.05.2016**
(21) Anmeldenummer: 12815708.8
(22) Anmeldetag: 27.12.2012
(51) Int. Cl.: F03B 3/10, F03B 13/06, F03B 13/08

(54) **WASSERKRAFTANLAGE MIT EINEM VERZWEIGUNGSTEIL**
WATER POWER PLANT COMPRISING A BRANCH PART
CENTRALE HYDROÉLECTRIQUE COMPRENANT UN ÉLÉMENT DE DÉRIVATION

(30) Priorität: 15.02.2012 DE 102012002809
(43) Veröffentlichungstag der Anmeldung: 24.12.2014
(73) Patentinhaber: Voith Patent GmbH, 89522 Heidenheim (DE)
(72) Erfinder: STUMMER, Manfred, 89520 Heidenheim (DE)
(74) Vertreter: Dr. Weitzel & Partner
(86) Internationale Anmeldenummer: PCT/EP2012/076923
(87) Internationale Veröffentlichungsnummer: WO 2013/120564

(56) Entgegenhaltungen:
- CH-A- 414 353
- DE-C- 606 894
- US-A- 1 467 168

## Beschreibung

Die Erfindung betrifft das Gebiet der Wasserkraftanlagen. Eine solche Wasserkraftanlage umfasst mindestens zwei hydraulische Maschinen. Hiervon ist wenigstens eine Maschine eine Pumpe.

Zwischen einem Oberwasserbecken und einem Unterwasserbecken ist eine Pumpturbinen-Einheit mit einer Pumpe und einer Turbine sowie einem Generator. In Zeiten hohen Bedarfes an elektrischer Energie strömt Wasser durch eine Hauptdruckleitung vom Oberwasserbecken durch die Turbine zum Unterwasserbecken.

In Zeiten geringen Energiebedarfes arbeitet die Pumpturbine als Pumpe. Sie wird von der elektrischen Maschine angetrieben, die dann als Elektromotor arbeitet. Die Pumpe fördert dann Wasser aus dem Unterwasserbecken durch eine Pumpendruckleitung sowie durch die Hauptdruckleitung zum Oberwasserbecken. Solche Maschinen sind z.B. aus DE 606 894 bekannt. Auch ist es möglich, zum Zwecke der Leistungsregelung im hydraulischen Kurzschluss zu arbeiten. Dabei wird ein Teil oder der gesamte Pumpenvolumenstrom der Turbine zugeführt.

Die Anlage umfasst ein Verzweigungsteil. An dieses sind die Hauptdruckleitung, die Turbinendruckleitung sowie die Pumpendruckleitung angeschlossen. Die Pumpendruckleitung enthält einen Krümmer.

Jedes Strömen einer Flüssigkeit in einer Rohrleitung ist bekanntlich verlustbehaftet. Die Strömungsverluste bei einer Strömungsumlenkung sind besonders hoch. Dies gilt somit für einen Rohrkrümmer oder für ein Verzweigungsteil.

Der Erfindung liegt die Aufgabe zugrunde, eine Pumpturbinenanlage gemäß dem Oberbegriff von Anspruch 1 derart zu gestalten, dass die Strömungsverluste im Krümmer der Pumpendruckleitung sowie im Verzweigungsteil verringert werden.

Diese Aufgabe wird mittels einer Pumpturbinenanlage gelöst, die die Merkmale des kennzeichnenden Teiles von Anspruch 1 aufweist.

Demgemäß wird der Krümmer der Pumpendruckleitung als sogenannter Verzögerungskrümmer gestaltet, das heißt die Querschnittsfläche der Pumpendruckleitung vor dem Eintritt in das Verzweigungsteil nimmt zu. Hierdurch tritt eine gewisse Verzögerung der Strömung auf. Hierdurch wird sowohl der Strömungsverlust im Krümmer selbst als auch im nachgeschalteten Verzweigungsteil verringert.

Der Verzögerungskrümmer kann sich kontinuierlich erweitern. Er kann auch aus einer Mehrzahl von Segmenten aufgebaut sein, deren Querschnittsfläche von Segment zu Segment größer wird, in Strömungsrichtung gesehen.

Die Erfindung ist anhand der Zeichnung näher erläutert. Darin ist im Einzelnen folgendes dargestellt:
- Figur 1: zeigt in schematischer Darstellung eine Pumpturbinenanlage mit einer vertikalen Welle in einer Seitenansicht.
- Figur 2: zeigt in einer schematischen Ansicht eine Pumpturbinenanlage, gesehen in Richtung der Drehachse.
- Figur 3: zeigt die relevanten Teile von Figur 2, nämlich ein Verzweigungsteil, eine Hauptdruckleitung, eine Turbinendruckleitung sowie eine Pumpendruckleitung in Gestalt eines Krümmers.

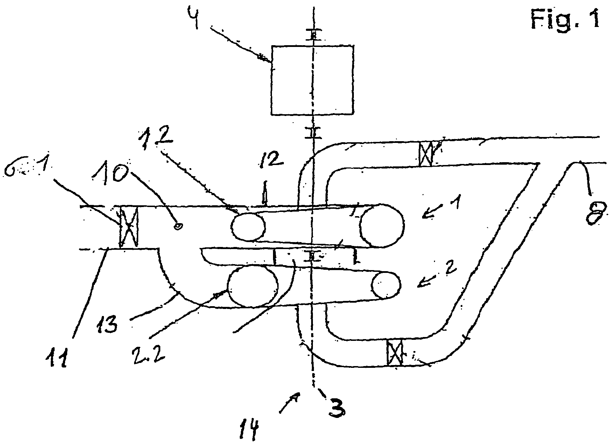

Wie man aus Figur 1 erkennt, schließt sich an das Turbinenspiralgehäuse 1.2 eine Druckleitung 12 sowie an das Pumpenspiralgehäuse 2.2 eine Druckleitung 13 an. Beide Druckleitungen 12, 13 sind über ein Verzweigungsteil 10 mit der Druckleitung 11 verbunden, in welcher sich ein gemeinsames Absperrorgan 6.1 befindet.

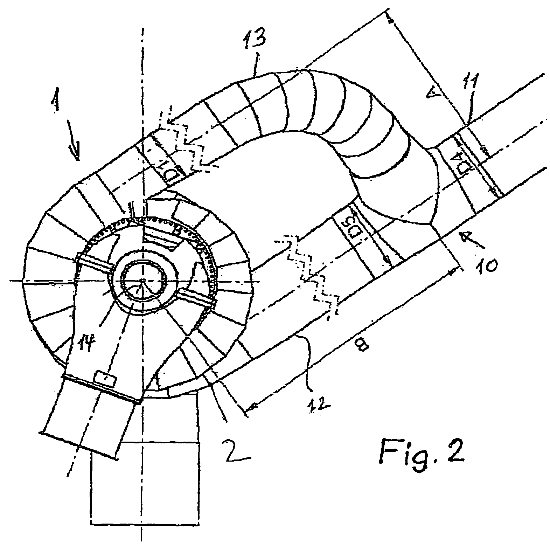

Die in Figur 2 gezeigte Anlage umfasst eine Pumpe 2 und Turbine 1. Sie ist dargestellt in Draufsicht auf die Drehachse 14.

Man erkennt ein Verzweigungsteil 10. An dieses sind angeschlossen eine Hauptdruckleitung 11, eine Turbinendruckleitung 12 sowie eine Pumpendruckleitung 13 in Gestalt eines Krümmers. Die Pumpendruckleitung 13 ist aus einzelnen Segmenten aufgebaut, auf die später noch eingegangen werden soll, desgleichen auf die Abmessungen A und B.

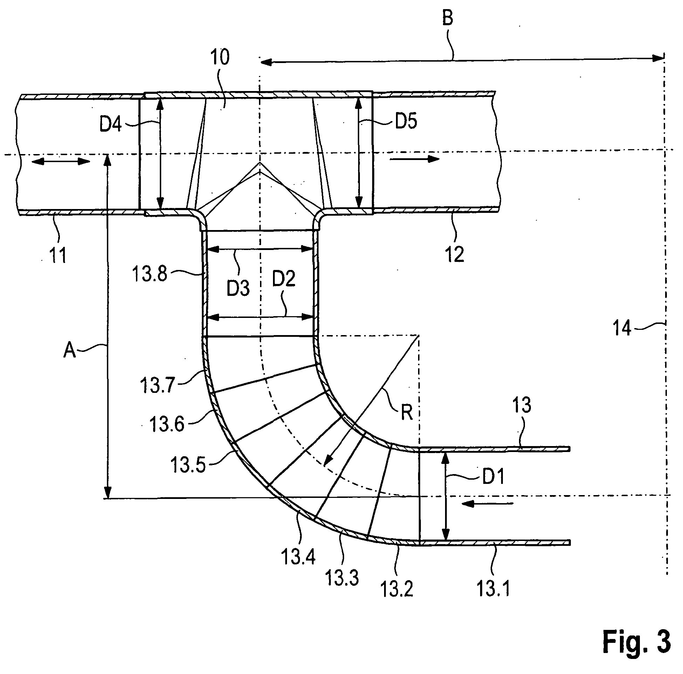

Das in Figur 3 gezeigte Leitungssystem umfasst als zentrales Bauteil ein Verzweigungsteil 10. An Verzweigungsteil 10 sind die Hauptdruckleitung 11 angeschlossen, die Turbinendruckleitung 12 sowie die als Krümmer ausgeführte Pumpendruckleitung 13.

Man erkennt die Drehachse 14 der hydraulischen Maschine.

Von entscheidender Bedeutung ist die Gestaltung der Pumpendruckleitung 13. Ein zylindrisches Segment 13.1 der Pumpendruckleitung ist an die hier nicht gezeigte Pumpturbine angeschlossen. Es folgen konische Segmente 13.2 bis 13.7. Die Querschnitte der konischen Segmente erweitern sich von Segment zu Segment Schließlich folgt ein zylindrisches Segment 13.8, das im Verzweigungsteil 10 mündet.

Die Hauptdruckleitung 11, das Verzweigungsteil 10 sowie die Turbinendruckleitung 12 hingegen haben denselben konstanten Strömungsquerschnitt.

Die Strömungsrichtungen sind durch Pfeile veranschaulicht. Hauptdruckleitung 11 ist mit einem Doppelpfeil versehen, um die beiden möglichen Strömungsrichtungen zu veranschaulichen. Im Turbinenbetrieb verläuft die Strömung - vom Oberwasserbecken kommend - durch das Verzweigungsteil 10 und die Turbinendruckleitung 12. Im Pumpbetrieb verläuft die Strömung vom Unterwasserbecken kommend durch die Pumpendruckleitung 13, durch das Verzweigungsteil 10, durch die Hauptdruckleitung 11 zum Oberwasserbecken.

Der Eintrittsdurchmesser des Verzögerungskrümmers, das heiß der Eintrittsdurchmesser von Segment 13.2, ist gleich dem Durchmesser D1 des zylindrischen Segmentes 13.1. Er könnte auch größer sein.

Das Segment 13.8 kann auch konisch ausgebildet sein, so dass es sich in Pumpen-Strömungsrichtung erweitert.

Segment 13.8 hat einen etwas größeren Austrittsdurchmesser D3, als sein Eintrittsdurchmesser D2. Hier findet somit eine Erweiterung innerhalb des Segmentes 13.8 statt. Segment 13.8 kann jedoch auch zylindrisch sein. Demgemäß sind Eintrittsdurchmesser D2 und Austrittsmesser D3 gleich.

Auch die Segmente 13.3 bis 13.7 können sich kontinuierlich erweitern.

Radius R des Verzögerungskrümmers ist gleich dem 1,1 bis 10-fachen des Eintrittsdurchmessers D1.

Der Abstand A zwischen der Mittelachse (mittlerer Stromfaden) der Hauptdruckleitung 11 und der Mittelachse der Pumpendruckleitung 13 liegt im Bereich des 2-fachen bis 200-fachen des Eintrittsdurchmessers D1.

Der Abstand B zwischen der Mittelachse des Segmentes 13.8 und der Drehachse 14 der hydrodynamischen Maschine beträgt das 2-fache bis 200-fache des Durchmessers D5 der Turbinendruckleitung 12.

Durchmesser D5 der Turbinendruckleitung 12 ist gleich dem Austrittsdurchmesser D3 des Verzögerungskrümmers, oder größer als dieser.

Durchmesser D5 der Turbinendruckleitung 12 ist identisch mit dem Eintrittsdurchmesser D2 des Segmentes 13.8, oder anders gesagt dem Austrittsdurchmesser des Verzögerungskrümmers.

Durchmesser D5 der Turbinendruckleitung 12 kann bis zu fünfmal größer sein als der Austrittsdurchmesser D2 des Verzögerungskrümmers.

Die beiden Durchmesser D4 und D5 können gleich groß sein.

Der Eingangsdurchmesser D2 und der Ausgangsdurchmesser D3 von Segment 13.8 können gleich groß sein. Jedoch kann auch D3 größer sein, als D2. So kann Durchmesser D3 bis zu fünfmal größer sein als Durchmesser D2.

### Bezugszeichenliste

- 1: Turbine
- 1.1: Turbinenlaufrad
- 1.2: Turbinenspiralgehäuse
- 1.2.1: Leitschaufel
- 1.6: Absperrorgan
- 2: Pumpe
- 2.1: Pumpenlaufrad
- 2.2: Pumpenspiralgehäuse
- 3: Welle
- 4: elektrische Maschine
- 6.1: Absperrorgan
- 7: Drehachse
- 8: Saugleitung
- 9: Lager
- 10: Verzweigungsteil
- 11: Hauptdruckleitung
- 12: Turbinendruckleitung
- 13: Pumpendruckleitung
- 13.1: zylindrisches Segment
- 13.2 - 13.7: konische Segmente
- 13.8: zylindrisches Segment
- 14: Drehachse

## Patentansprüche

1. Pumpturbinenanlage, umfassend
1.1 eine Turbine (1) mit einem Turbinenlaufrad (1.1) sowie einem Turbinenspiralgehäuse (1.2);
1.2 eine Pumpe (2) mit einem Pumpenlaufrad (2.1) sowie ein Pumpenspiralgehäuse (2.2);
1.3 die beiden Spiralgehäuse (1.2, 2.2) sind gegenläufig zueinander angeordnet;
1.4 eine Welle (3), auf der das Turbinenlaufrad (1.1) und das Pumpenlaufrad (2.1) drehfest angeordnet sind;
1.5 eine elektrische Maschine (4), die in einer Triebverbindung mit der Welle (3) steht oder in eine solche bringbar ist;
1.6 die Druckleitungen (12, 13) der beiden Spiralgehäuse (1.2, 2.2) münden in einer gemeinsamen Hauptdruckleitung (11);
1.7 eine Turbinendruckleitung (12) zum Einleiten von Wasser im Turbinenbetrieb aus der Hauptdruckleitung (11) in eine Pumpturbine;
1.8 eine als Krümmer gestaltete Pumpendruckleitung (13) zum Einleiten von Wasser im Pumpbetrieb aus der Pumpturbine in die Hauptdruckleitung (11), oder beim hydraulischen Kurzschluss zurück durch die Turbinendruckleitung (12) zur Pumpturbine;
1.9 ein Verzweigungsteil (10), an das die Hauptdruckleitung (11), die Turbinendruckleitung (12) sowie die Pumpendruckleitung (13) angeschlossen sind,
**gekennzeichnet durch** die folgenden Merkmale:
1.10 der Strömungsquerschnitt des Krümmers ist an seinem Austritt größer als an seinem Eintritt.

2. Pumpturbinenanlage nach Anspruch 1, **gekennzeichnet durch** die folgenden Merkmale:
2.1 die Pumpendruckleitung (13) weist wenigstens auf einem Teil ihres Verlaufes in Strömungsrichtung ein Segment (13.2 - 13.7) auf, auf dem sich der Strömungsquerschnitt erweitert.

3. Pumpturbinenanlage nach Anspruch 1 oder 2, **dadurch gekennzeichnet, dass** der Eintrittsdurchmesser (D1) des Krümmers gleich groß wie oder größer als der Durchmesser der Pumpendruckleitung (13) ist.

4. Pumpturbinenanlage nach einem der Ansprüche 1 bis 3, **dadurch gekennzeichnet, dass** zwischen dem Krümmer und dem Verzweigungsteil (10) ein konisches oder zylindrisches Rohrstück 13.8 vorgesehen ist.

5. Pumpturbinenanlage nach einem der Ansprüche 1 bis 4, **dadurch gekennzeichnet, dass** der Krümmer gegossen oder aus Rohrsegmenten (13.2 - 13.7) zusammengeschweißt ist.

6. Pumpturbinenanlage nach einem der Ansprüche 1 bis 5, **dadurch gekennzeichnet, dass** das Verzweigungsteil (10) unmittelbar an den Krümmer angeschlossen ist.

7. Pumpturbinenanlage nach einem der Ansprüche 1 bis 5, **dadurch gekennzeichnet, dass** zwischen Krümmer und Verzweigungsteil (10) ein Rohrsegment (13.8) zwischengeschaltet ist.

8. Pumpturbinenanlage nach einem der Ansprüche 1 bis 7, **dadurch gekennzeichnet, dass** sich der Querschnitt des Krümmers in Strömungsrichtung kontinuierlich erweitert.

9. Pumpturbinenanlage nach einem der Ansprüche 1 bis 8, **dadurch gekennzeichnet, dass** der Radius (R) des Krümmers das 1,1-fache bis 10-fache des Eintrittsdurchmessers (D1) des Krümmers ist.

10. Pumpturbinenanlage nach einem der Ansprüche 1 bis 9, **dadurch gekennzeichnet, dass** der Abstand (A) zwischen der Hauptdruckleitung (11) und der Pumpendruckleitung (13) zwischen dem 2-fachen und dem 200-fachen des Eintrittsdurchmessers (D1) des Krümmers liegt.

11. Pumpturbinenanlage nach einem der Ansprüche 1 bis 10, **dadurch gekennzeichnet, dass** der Abstand (B) zwischen der Drehachse (14) der hydraulischen Maschine und dem Mittelpunkt des Verzweigungsteiles (10) das 2-fache bis 200-fache des Durchmessers (D5) der Turbinendruckleitung (12) ist.

12. Pumpturbinenanlage nach einem der Ansprüche 1 bis 11, **dadurch gekennzeichnet, dass** der Austrittsdurchmesser (D2) des Krümmers das 1,1 - 5-fache des Eintrittsdurchmessers (D1) des Krümmers ist.

13. Pumpturbinenanlage nach einem der Ansprüche 1 bis 12, **dadurch gekennzeichnet, dass** der Durchmesser (D5) der Turbinendruckleitung (12) das 1,1-fache bis 5-fache des Durchmessers (D1) der Pumpendruckleitung (13) ist.

14. Pumpturbinenanlage nach einem der Ansprüche 1 bis 13, **dadurch gekennzeichnet, dass** der Durchmesser (D5) der Turbinendruckleitung (12) gleich dem Austrittsdurchmesser (D2) des Krümmers ist.

15. Pumpturbinenanlage nach einem der Ansprüche 1 bis 13, **dadurch gekennzeichnet, dass** der Durchmesser (D5) der Turbinendruckleitung (12) bis zum 5-fachen größer ist, als der Austrittsdurchmesser (D2) des Krümmers.

16. Pumpturbinenanlage nach einem der Ansprüche 1 bis 15, **dadurch gekennzeichnet, dass** der Durchmesser (D4) der Hauptdruckleitung (11) gleich dem Durchmesser (D5) der Turbinendruckleitung (13) ist.

17. Pumpturbinenanlage nach einem der Ansprüche 1 bis 15, **dadurch gekennzeichnet, dass** der Durchmesser (D4) der Hauptdruckleitung (11) bis zum 5-fachen des Durchmessers (D5) der Turbinendruckleitung (12) beträgt.

18. Pumpturbinenanlage nach einem der Ansprüche 1 bis 17, **dadurch gekennzeichnet, dass** die Durchmesser (D3 und D2) des zwischen Krümmer und Verzweigungsteil (10) geschalteten Segmentes (13.8) gleich groß sind.

19. Pumpturbinenanlage nach einem der Ansprüche 1 bis 17, **dadurch gekennzeichnet, dass** der Durchmesser (D3) des Segments (13.8) bis zum 5-fachen größer als der Durchmesser (D2) ist.

## Claims

1. A pump turbine plant, comprising
1.1 a turbine (1) with a turbine impeller (1.1) as well as a turbine spiral casing (1.2);
1.2 a pump (2) with a pump impeller (2.1) as well as a pump spiral casing (2.2);
1.3 both spiral casings (1.2, 2.2) are arranged in opposite directions to each other;
1.4 a shaft (3), on which the turbine impeller (1.1) and the pump impeller (2.1) are arranged in a rotationally fixed manner;
1.5 an electric machine (4), which is in a drive connection with the shaft (3) or can be brought into said connection;
1.6 the pressure lines (12, 13) of both spiral casings (1.2, 2.2) emerge in a common main pressure line (11);
1.7 a turbine pressure line (12) for introducing water out of the main pressure line (11) into a pump turbine while the turbine is in operation;
1.8 a pump pressure line (13) configured as a bend for introducing water out of the pump turbine into the main pressure line (11) while the pump is in operation, or back through the turbine pressure line (12) to the pump turbine in case of hydraulic short-circuit;
1.9 a branch part (10), to which the main pressure line (11), the turbine pressure line (12) as well as the pump pressure line (13) are connected,
**characterised by** the following features:
1.10 the flow cross-section of the bend is larger at the outlet therefrom than at the inlet therefrom.

2. A pump turbine plant according to claim 1, **characterised by** the following features:
2.1 the pump pressure line (13) includes at least on one section of its course in flow direction a segment (13.2 - -13.7), on which the flow cross-section widens.

3. A pump turbine plant according to claim 1 or 2, **characterised in that** the inlet diameter (DI) of the bend is identical to or greater than the diameter of the pump pressure line (13).

4. A pump turbine plant according to one of the claims 1 to 3, **characterised in that** a conical or cylindrical tube section 13.8 is provided between the bend and the branch part (10).

5. A pump turbine plant according to one of the claims 1 to 4, **characterised in that** the bend is cast or welded together out of pipe segments (13.2 - 13.7).

6. A pump turbine plant according to one of the claims 1 to 5, **characterised in that** the branch part (10) is connected directly to the bend.

7. A pump turbine plant according to one of the claims 1 to 5, **characterised in that** a pipe segment (13.8) is interposed between the bend and the branch part (10).

8. A pump turbine plant according to one of the claims 1 to 7, **characterised in that** the cross-section of the bend widens continuously in flow direction.

9. A pump turbine plant according to one of the claims 1 to 8, **characterised in that** the radius (R) of the bend ranges between 1.1 and 10 times the inlet diameter (DI).

10. A pump turbine plant according to one of the claims 1 to 9, **characterised in that** the distance (A) between the main pressure line (11) and the pump pressure line (13) ranges between 2 and 200 times the inlet diameter (DI) of the bend.

11. A pump turbine plant according to one of the claims 1 to 10, **characterised in that** the distance (B) between the rotational axis (14) of the hydraulic machine and the centre of the branch part (10) ranges between 2 and 200 times of the diameter (D5) of the turbine pressure line (12).

12. A pump turbine plant according to one of the claims 1 to 11, **characterised in that** the outlet diameter (D2) of the bend ranges between 1.1 and 5 times the inlet diameter (DI) of the bend.

13. A pump turbine plant according to one of the claims 1 to 12, **characterised in that** the diameter (D5) of the turbine pressure line (12) ranges between 1.1 and 5 times of the diameter (D1) of the pump pressure line (13).

14. A pump turbine plant according to one of the claims 1 to 13, **characterised in that** the diameter (D5) of the turbine pressure line (12) is identical to the outlet diameter (D2) of the bend.

15. A pump turbine plant according to one of the claims 1 to 13, **characterised in that** the diameter (D5) of the turbine pressure line (12) is up to five times greater than the outlet diameter (D2) of the bend.

16. A pump turbine plant according to one of the claims 1 to 15, **characterised in that** the diameter (D4) of the main pressure line (11) is identical to the diameter (D5) of the turbine pressure line (13).

17. A pump turbine plant according to one of the claims 1 to 15, **characterised in that** the diameter (D4) of the main pressure line (11) amounts up to five times of the diameter (D5) of the turbine pressure line (12).

18. A pump turbine plant according to one of the claims 1 to 17, **characterised in that** the diameters (D3 and D2) of the segment (13.8) connected between the bend and the branch part (10) are identical.

19. A pump turbine plant according to one of the claims 1 to 17, **characterised in that** the diameter (D3) of the segment (13.8) is up to five times greater than the diameter (D2).

## Revendications

1. Station de turbine-pompe, comprenant
1.1 une turbine (1) avec une roue de turbine (1.1) ainsi qu'un carter de turbine en spirale (1.2) ;
1.2 une pompe (2) avec une roue de pompe (2.1) ainsi qu'un carter de pompe en spirale (2.2) ;
1.3 les deux carters en spirale (1.2, 2.2) sont disposés en sens opposé l'un par rapport à l'autre ;
1.4 un arbre (3) sur lequel la roue de turbine (1.1) et la roue de pompe (2.1) sont disposées fixe en rotation ;
1.5 une machine électrique (4) qui est ou qui peut être mise en liaison motrice avec l'arbre (3) ;
1.6 les conduites de pression (12, 13) des deux carters en spirale (1.2, 2.2) débouchent dans une conduite de pression principale commune (11) ;
1.7 une conduite de pression de turbine (12) servant à diriger de l'eau issue de la conduite de pression principale (11) vers une turbine-pompe pendant que la turbine est en marche ;
1.8 une conduite de pression de pompe (13) configurée sous forme d'un coude servant à diriger de l'eau issue de la turbine-pompe vers la conduite de pression principale (11), ou en cas du court-circuit hydraulique, à rediriger de l'eau vers la turbine-pompe en passant par la conduite de pression de turbine (12) ;
1.9 un élément de dérivation (10) auquel sont raccordées la conduite de pression principale (11), la conduite de pression de turbine (12) ainsi que la conduite de pression de pompe (13),
**caractérise par** les critères suivants :
1.10 la section transversale d'écoulement du coude est plus grande à sa sortie qu'à son entrée.

2. Station de turbine-pompe selon la revendication 1, **caractérisée par** les critères suivants :
2.1 la conduite de pression de pompe (13) dispose, dans le sens du flux et au moins sur une partie de sa conduite, d'un segment (13.2 - 13.7) via lequel la section transversale d'écoulement s'élargie.

3. Station de turbine-pompe selon l'une des revendications 1 ou 2, **caractérisée en ce que** le diamètre d'entrée (D1) du coude est égal à ou plus important que le diamètre de la conduite de pression de pompe (13).

4. Station de turbine-pompe selon l'une des revendications 1 à 3, **caractérisée en ce qu'**un élément tubulaire conique ou cylindrique (13.8) est prévu se trouver entre le coude et l'élément de dérivation (10).

5. Station de turbine-pompe selon l'une des revendications 1 à 4, **caractérisée en ce que** le coude est coulé ou soudé à partir de segments de tube (13.2 - 13.7).

6. Station de turbine-pompe selon l'une des revendications 1 à 5, **caractérisée en ce que** l'élément de dérivation (10) est raccordé directement au coude.

7. Station de turbine-pompe selon l'une des revendications 1 à 5, **caractérisée en ce qu'**un segment de tube (13.8) se trouve entre le coude et l'élément de dérivation (10).

8. Station de turbine-pompe selon l'une des revendications 1 à 7, **caractérisée en ce que** la section transversale du coude s'étend de façon continue dans le sens du flux.

9. Station de turbine-pompe selon l'une des revendications 1 à 8, **caractérisée en ce que** le rayon (R) du coude est compris entre 1,1 fois et 10 fois le diamètre d'entrée (D1) du coude.

10. Station de turbine-pompe selon l'une des revendications 1 à 9, **caractérisée en ce que** l'écart (A) entre la conduite de pression principale (11) et la conduite de pression de pompe (13) est compris entre 2 et 200 fois le diamètre d'entrée (D1) du coude.

11. Station de turbine-pompe selon l'une des revendications 1 à 10, **caractérisée en ce que** l'écart (B) entre l'axe de rotation (14) de la machine hydraulique et le centre de l'élément de dérivation (10) est compris entre 2 et 200 fois le diamètre (D5) de la conduite forcée de turbine (12).

12. Station de turbine-pompe selon l'une des revendications 1 à 11, **caractérisée en ce que** le diamètre de sortie (D2) du coude est compris entre 1,1 et 5 fois le diamètre d'entrée (D1) du coude.

13. Station de turbine-pompe selon l'une des revendications 1 à 12, **caractérisée en ce que** le diamètre (D5) de la conduite de pression de turbine (12) est compris entre 1,1 et 5 fois le diamètre (D1) de la conduite de pression de pompe (13).

14. Station de turbine-pompe selon l'une des revendications 1 à 13, **caractérisée en ce que** le diamètre (D5) de la conduite de pression de turbine (12) est égal au diamètre de sortie (D2) du coude.

15. Station de turbine-pompe selon l'une des revendications 1 à 13, **caractérisée en ce que** le diamètre (D5) de la conduite de pression de turbine (12) est au maximum 5 fois plus grand que le diamètre de sortie (D2) du coude.

16. Station de turbine-pompe selon l'une des revendications 1 à 15, **caractérisée en ce que** le diamètre (D4) de la conduite de pression principale (11) est égal au diamètre (D5) de la conduite de pression de turbine (13).

17. Station de turbine-pompe selon l'une des revendications 1 à 15, **caractérisée en ce que** le diamètre (D4) de la conduite forcée principale (11) est au maximum 5 fois plus grand que le diamètre (D5) de la conduite de pression de turbine (12).

18. Station de turbine-pompe selon l'une des revendications 1 à 17, **caractérisée en ce que** les diamètres (D3 et D2) du segment (13.8) se trouvant entre le coude et l'élément de dérivation (10) sont égaux.

19. Station de turbine-pompe selon l'une des revendications 1 à 17, **caractérisée en ce que** le diamètre (D3) du segment (13.8) est au maximum 5 fois plus grand que le diamètre (D2).
